# EUROPEAN PATENT APPLICATION

(11) **EP 1 413 992 A2**
(43) Date of publication of application: **28.04.2004**
(21) Application number: 03255288.7
(22) Date of filing: 26.08.2003
(51) Int. Cl.: G07D 11/00, G07D 7/00

(54) **Self-service deposit method and apparatus**

(30) Priority: 23.10.2002 US 278964
(71) Applicant: NCR INTERNATIONAL INC., Dayton, Ohio 45479 (US)
(72) Inventor: Bellucci, Dennis J., Livermore, CA 94550 (US)
(74) Representative: Williamson, Brian

(57) **Abstract**

A self-service deposit terminal (10) for bank notes, in the deposited notes are subjected to an acceptance procedure in which the deposited notes are passed through a note validator and a decision is made regarding the validity of the notes. Invalid notes are then separated from accepted notes and diverted to a purge bin. On route to the purge bin, at least, counterfeit notes are marked, so as to render them unusable.

## Description

The present invention relates to a self-service deposit method and apparatus for receiving media including bank notes.

A deposit apparatus for receiving bank notes may be included in an automated teller machine (ATM). It is known for an ATM of this type to dispense bank notes that have earlier been deposited at the ATM, such ATMs being known as a recycling ATMs.

Known self-service deposit terminals for receiving loose bank notes (in contrast with notes contained in envelopes) subject the notes to a validation procedure. One or more of the deposited notes may be rejected on the grounds that they are damaged, dirty or forged, and the rejected notes are returned to the user.

This known type of deposit terminal has the disadvantage that the user must wait at the terminal for possible return of rejected notes, and may spend additional time in retrying to deposit the rejected notes. Also, there is an associated problem for ATM service providers, in that if a forged or counterfeit note is received the notes must be retained and not reissued. To ensure that they are not reissued these notes have to date been stored in a separate purge bin to other retained not or notes which have not been issued successfully.

It is an object of the present invention to provide an improved self-service deposit method and apparatus.

It is an additional object of the present invention to provide a deposit apparatus that addresses the problem of identifying counterfeit bank notes or other media with an intrinsic value.

According to one aspect of the present invention there is provided a media deposit apparatus, comprising means for receiving deposited notes, transport means for transporting the notes throughout the apparatus, note validation means arranged to determine if a deposited note is counterfeit or not, a purge bin to receive counterfeit notes and means for marking counterfeit notes to identify them as such.

According to another aspect of the present invention there is provided an ATM having a media deposit apparatus comprising, means for receiving deposited notes, transport means for transporting the notes throughout the apparatus, note validation means arranged to determine if a deposited note is counterfeit or not, a purge bin to receive counterfeit notes and means for marking counterfeit notes to identify them as such.

According to yet another aspect of the present invention there is provided a method of handling notes, the method comprising the steps of: subjecting notes to an acceptance procedure; separating rejected notes from accepted notes; diverting rejected notes to a rejection bin; and marking the rejected notes so as to render them unusable.

According to still another aspect of the present invention there is provided a sheet deposit apparatus comprising: receiving means for receiving at least one sheet deposited by a user during a deposit transaction; acceptance means for subjecting deposited sheets to an acceptance procedure and making a decision as to whether to accept or reject deposited sheets; separating means for separating rejected sheets from accepted sheets; retaining means for receiving rejected sheets; identifying means for identifying the particular transaction to which a rejected sheet belongs; and marking means for marking the rejected sheets so as to render them unusable.

According to still another aspect of the present invention there is provided a method of processing notes deposited in a self-service deposit terminal, in which deposited notes are subjected to an acceptance procedure in which the deposited notes are passed through a note validator and a decision is made regarding the validity of the notes, invalid notes are then separated from accepted notes and diverted to a purge bin and, at least, counterfeit notes are marked, so as to render them unusable.

The above and other objects, features, and advantages of the present invention will become apparent from the following description and the attached drawings.
An embodiment of the present invention will now be described, by way of example, with reference to the accompanying drawings, in which;
Fig. 1 is a perspective view of a self-service deposit terminal;
Fig. 2 is a block diagram of the deposit terminal of Fig. 1; and
Fig. 3 is a schematic representation of a deposit apparatus in accordance with the invention as described in the terminal of Figs. 1 and 2.

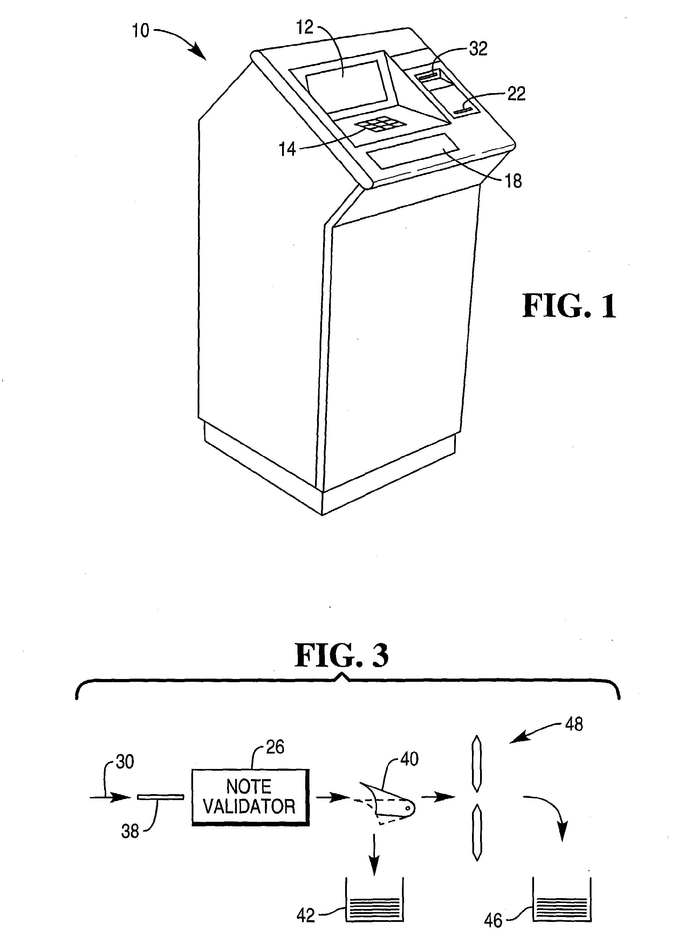

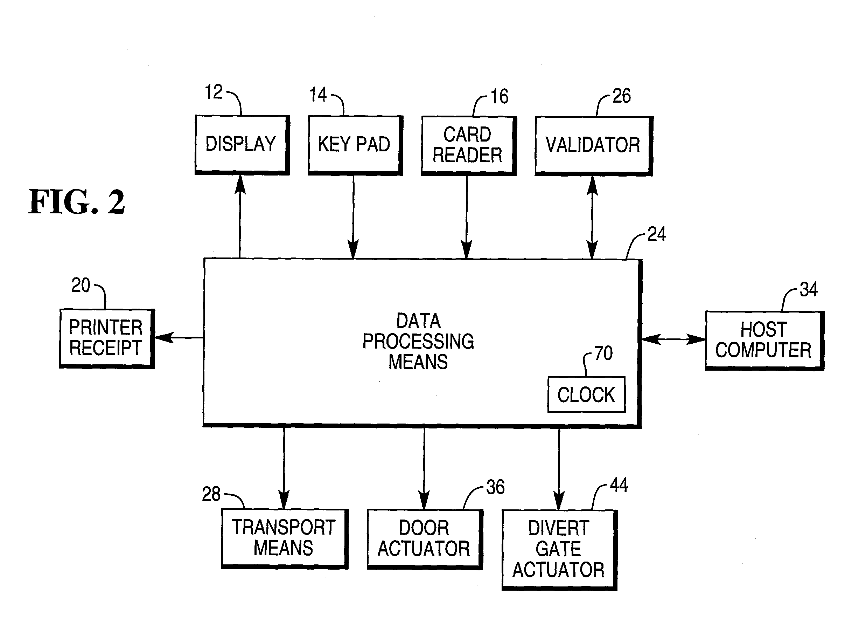

Referring to Figs. 1 and 2, the self-service deposit terminal 10 shown therein includes a display 12 for displaying user information, a key pad 14 for inputting data, a card reader 16 for receiving a user identity card, a door 18 behind which is a slot in which bank notes can be deposited, a receipt printer 20 for printing a receipt acknowledging a deposit made by a user and for issuing the receipt to the user via a slot 22, and data processing means 24 to which the display 12, the key pad 14, the card reader 16 and the receipt printer 20 are connected. A conventional note validator 26 and note transport means 28 are also connected to the data processing means 24, the transport means 28 serving to transport deposited notes along paths indicated by arrows 30 in Figs. 3 and 4 under the control of the data processor means 24.

To make a deposit, a user inserts his identification card in the card slot 32 of the terminal 10. Data contained in a magnetic strip on the card is read by the card reader 16 and transmitted by the data processing means 24 to a host computer 34. If the host computer 34 authorizes the card, then the data processing means 24 causes the door 18 to be opened by means of a door actuator 36 so as to allow the user to insert into the deposit slot the note or notes which are to be deposited. Also, the user enters details e.g. amount of the deposit by means of the keypad 14. Once the deposit has been made the door 18 closes.

Referring now to Fig. 3, the deposited notes are separated from each other by conventional separating means (not shown) and individually fed by the transport means 28 (see Fig. 2) to the note validator 26. The note validator 26 makes a determination as to whether each note fed to it, e.g. the note 38 shown in Fig. 3, is valid or invalid.

The note validator 26 also recognizes the value of accepted notes of different denominations and the data processing means 24 uses this information to calculate a total value of the accepted notes deposited.

If a note is accepted as valid by the validator 26 then a divert gate 40 remains in its home position shown in solid outline in Fig. 3 and the note is fed to collection means 42.

If a note is rejected as counterfeit by the note validator 26, then the data processing means 24 rotates the divert gate 40 into the position shown in chain outline in Fig. 3 by means of an actuator 44 (see Fig. 2), and the note is fed by transport means to a purge bin 46.

On route to the purge bin 46 invalid notes pass through a marking means 48, which is arranged to mark, at least, a portion of the notes.

In one embodiment only counterfeit notes are marked, other rejected notes such as torn or damaged notes, are sent to the purge bin 46 without being marked. In another embodiment, all diverted notes are marked.

The marking means may be an ink staining means, such as an inked roller or rollers. Alternatively, the marking means may be a printer arranged to print information on the notes regarding the details of the deposit of the note and/or the reason for the rejection of the note. The printing may be in a human readable form or in a machine-readable form, such as a bar code. The data may include information on the user who deposited the note and/or information on the circumstances of the deposit (time, date, location etc.). In this embodiment pertinent information may also be printed on other (non-counterfeit) diverted notes, including the reason for diverting the notes.

Once all the notes deposited by the customer have either been fed to the collection means 42 or purge bin 46, the data processor means 24 causes the total value of accepted notes deposited to be credited to the user's account identified by the information read off the identification card that had earlier been inserted into the card reader slot 32 (see Figs. 1 and 2). The receipt printed by the receipt printer 20 includes the total value of the accepted notes deposited. This information may also be passed to the host computer 34 (Figure 2).

It should be understood that a self-service deposit apparatus in accordance with the invention may be included in a recycling ATM. In this case, collection means in the ATM to which accepted deposited notes are fed includes a plurality of stores where each store holds notes of one particular denomination. The notes are sorted in response to the output from a note validator. If a subsequent user wishes to make a withdrawal from the ATM then notes which have been deposited earlier in the collection means may be retrieved from one or more of the relevant stores and passed to the user in fulfillment of his withdrawal request.

While the invention has been illustrated and described in detail in the drawings and foregoing description, such an illustration and description is to be considered as exemplary and not restrictive in character, it being understood that only the preferred embodiment has been shown and described and that all changes and modifications that come within the scope of the invention are desired to be protected. For example, such apparatus could be used for the reception, validation and marking of cheques or vouchers having a designated value.

In the specification and claims the term "ink" is intended to cover any ink pigment or other coloring suitable for the staining of permanent staining of notes in accordance with the present invention.

## Claims

1. An apparatus comprising:
means for receiving deposited notes;
transport means for transporting the notes;
note validation means for determining if a deposited note is counterfeit or not;
a purge bin for receiving counterfeit notes; and
means for marking counterfeit notes to identify them as such.

2. An apparatus according to claim 1, wherein the means for marking counterfeit notes includes means for staining the notes with ink.

3. An apparatus according to claim 1, wherein the means for marking counterfeit notes includes a printer for printing on the notes.

4. An apparatus according to claim 3, wherein the printer prints on other rejected notes.

5. An automated teller machine (ATM) comprising:
means for receiving deposited media;
validation means for determining if deposited media is counterfeit; and
means for marking counterfeit media to identify them as such.

6. An ATM according to claim 5, further comprising means for identifying a user of the ATM.

7. An ATM according to claim 5, further comprising means for identifying the circumstance of the deposit including one or more of time, date, location, and monetary value of the media deposited.

8. An ATM according to claim 5, further comprising a printer for printing information regarding a user of the ATM who deposited the media and the circumstances of the deposit of the media.

9. A method of handling notes at an automated teller machine (ATM), the method comprising the steps of:
subjecting notes to an acceptance procedure;
separating rejected notes from accepted notes;
diverting rejected notes to a rejection bin; and
marking rejected notes so as to render the rejected notes unusable.

10. A method according to claim 9, further comprising the step of identifying the particular transaction in which a rejected note was deposited.

11. A method according to claim 9, further comprising the step of transmitting rejected note information to a host computer which controls operation of the ATM.

12. A sheet deposit apparatus comprising:
receiving means for receiving at least one sheet deposited by a user during a deposit transaction;
acceptance means for subjecting deposited sheets to an acceptance procedure and making a decision as to whether to accept or reject deposited sheets;
separating means for separating rejected sheets from accepted sheets;
retaining means for receiving rejected sheets;
identifying means for identifying the particular transaction to which a rejected sheet belongs; and
marking means for marking at least some of the rejected sheets so as to render them unusable.

13. A method of processing media deposited in a self-service deposit terminal, the method comprising the steps of:
subjecting deposited media to an acceptance procedure in which the deposited media is passed through a media validator;
determining validity of the deposited media;
separating invalid media from accepted media;
diverting invalid media to a purge bin; and
marking at least counterfeit media so as to render the counterfeit media unusable.

14. A method according to claim 13, further comprising the step of marking invalid, non-counterfeit media so as to render them unusable.

15. A method of processing media deposited in an automated teller machine (ATM), the method comprising the steps of:
determining validity of the deposited media;
separating invalid media apart from valid media; and
marking at least some of the invalid media so as to render them unusable.

16. A method according to claim 15, wherein the step of determining validity of the deposited media includes the step of determining if the deposited media is counterfeit media.

17. A method according to claim 16, wherein the step of marking at least some of the invalid media includes step of marking only the counterfeit media to render the counterfeit media unusable.

18. A method according to claim 15, wherein the step of marking at least some of the invalid media includes the step of marking all invalid media to render the invalid media unusable.

19. A method according to claim 15, further comprising the step of diverting invalid media to a purge bin.
